# FASCICULE DE BREVET EUROPEEN

(11) **EP 0 444 992 B1**
(45) Date de publication et mention de la délivrance du brevet: **25.08.1993**
(21) Numéro de dépôt: 91400381.9
(22) Date de dépôt: 14.02.1991
(51) Int. Cl.: B65D 51/18

(54) **Ensemble pour le conditionnement d'une substance devant être protégée de l'atmosphère extérieure et procédé de conditionnement correspondant**
Vorrichtung zur Verpackung einer vor der Aussenatmosphäre zu schützenden Substanz und Verpackungsverfahren hierzu
Device to package a substance to be protected from the external atmosphere and corresponding packaging process

(30) Priorité: 26.02.1990 FR 9002333
(43) Date de publication de la demande: 04.09.1991
(73) Titulaire: L'OREAL, 75008 Paris (FR)
(72) Inventeur: Bouix, Hervé, F-78160 Marly-le-Roi (FR)
(74) Mandataire: Peuscet, Jacques

(56) Documents cités:
- FR-A- 1 567 696
- GB-A- 915 007

## Description

La présente invention se rapporte à un ensemble pour le conditionnement d'une substance que l'on souhaite conserver à l'abri de l'air, par exemple, une substance cosmétique (notamment, crème de beauté ou masque), une denrée alimentaire (notamment, café ou thé), une substance médicamenteuse ou un produit d'entretien. L'invention porte également sur un procédé de conditionnement de la substance dans ledit ensemble.

Un ensemble connu de ce type est constitué par un récipient, qui renferme la substance et dont le contenu est, après remplissage, protégé par un opercule réalisé en un matériau composite feuilleté, par exemple un matériau à deux couches aluminium/polyéthylène. Cet opercule est thermoscellé sur le bord supérieur du goulot du récipient ; il peut être arraché d'un seul tenant par l'utilisateur, qui le saisit par sa bordure ou par une languette de préhension et le soulève de manière à le retirer. On sait que les opercules couramment utilisés permettent de garantir l'inviolabilité du récipient, et de réaliser un bouchage totalement étanche, apportant ainsi une solution tout à fait acceptable au problème qui était posé, à savoir celui d'assurer une conservation parfaite des produits avant utilisation.

Toutefois, trois inconvénients peuvent se présenter avec de tels conditionnements :
- le premier inconvénient provient du fait que, dans la région centrale délimitée par la zone de scellement, l'opercule constitue une pellicule fragile - d'autant plus fragile que sa surface est plus importante - sans résistance axiale aux chocs qui sont susceptibles de se produire et qui risquent de la perforer facilement, ce qui conduit à un résultat contraire au but recherché ;
- le deuxième inconvénient provient de la difficulté que l'on peut avoir à détacher l'opercule sans le déchirer : il serait intéressant en effet qu'après chaque prélèvement de la substance dans le récipient, on puisse replacer l'opercule sur le goulot du récipient, car, dans la plupart des cas, le pouvoir collant de l'opercule n'est pas perdu, l'objectif étant de continuer à assurer, tout au cours de son utilisation, la bonne conservation de la substance ; or, dans la plupart des cas, l'opercule se déchire au moment de l'arrachage d'autant plus facilement que sa surface est plus grande - ce qui ne permet plus de lui faire jouer son rôle protecteur après la première utilisation ;
- le troisième inconvénient est qu'au moment du conditionnement, il est difficile de bien centrer l'opercule sur le récipient avant le scellage, et, comme cet opercule est, à ce moment, juste posé sur le rebord du récipient dans le poste de soudage, il peut se produire un léger déplacement de l'opercule. Ceci entraîne un décentrage de ce dernier par rapport au rebord du récipient, voire même une soudure insuffisante si l'opercule est très décentré. Pour surmonter ce problème, on adopte une cadence de pose de l'opercule assez faible, ce qui a pour conséquence qu'il faut prévoir, sur la chaîne de conditionnement, deux, voire trois, postes de pose des opercules au lieu d'un seul, pour respecter la cadence nominale de la machine.

Un opercule réutilisable, réalisé par thermoformage ou moulage par injection d'une matière plastique, peut être prévu à la place de l'opercule thermoscellé indiqué ci-dessus. Cet opercule réutilisable vient en appui, par sa bordure inférieure, sur une portée intérieure ménagée sur le récipient et constituée par un décrochement vers l'extérieur de la paroi interne du récipient, au voisinage de la bordure supérieure de ce dernier. Cet opercule réutilisable présente l'avantage d'offrir une protection du produit avant la première utilisation et pendant toute la durée d'utilisation de ce même produit. Mais son inconvénient essentiel réside dans le fait qu'il ne constitue ni un système d'inviolabilité ni un système visant à améliorer l'étanchéité du récipient.

On connaît aussi, par le FR-A-1 567 696, ou par le GB-A-915 007, un système qui utilise à la fois un opercule réutilisable, tel que défini ci-dessus, et un opercule thermoscellé réalisé en un matériau composite. Malheureusement, en juxtaposant ces deux moyens sur un même récipient, on ne fait aucunement disparaître le troisième inconvénient susmentionné des opercules thermoscellés et l'on augmente le prix de revient total en raison de la mise en place de chacun des deux opercules successivement sur le récipient.

Enfin, on connaît par le FR-A-2 602 751, un récipient destiné à renfermer une substance à protéger de l'atmosphère extérieure ; ce récipient comporte un opercule de protection et d'inviolabilité scellé sur la bordure supérieure de ce récipient laquelle délimite son embouchure ; un élément de renforcement dudit opercule est disposé au-dessous de la face interne de ce dernier, dans la région du récipient située au droit de l'embouchure, ledit élément de renforcement étant en appui sur une portée périphérique de la paroi du récipient pour conférer audit opercule une résistance améliorée au perçage dans la région centrale de l'embouchure. Dans un mode de réalisation particulier, l'élément de renforcement est rendu solidaire dudit opercule par collage. Pour conditionner la substance dans le récipient, on commence par remplir le récipient puis on vient poser la plaquette de renforcement dans l'embouchure de ce dernier où elle repose sur la portée périphérique précitée, des picots périphériques assurant son centrage. Ensuite, on vient réaliser la fixation de l'opercule par thermosoudage à la fois sur la face supérieure de la plaquette et sur le rebord du récipient, qui se trouvent tous les deux dans le même plan. Après un prélèvement de la substance contenue dans le récipient, on peut théoriquement replacer l'opercule, qui n'a subi aucune déchirure en raison de la présence de sa plaquette de renforcement associée, pour continuer à conserver la substance à l'abri de l'atmosphère extérieure tout au long de son utilisation. Toutefois, à l'usage, il apparaît que ce résultat ne peut pas toujours être atteint au mieux et que la protection du produit conditionné vis-à-vis de l'air extérieur n'est pas parfaitement assurée.

Ayant recherché une solution capable de résoudre les difficultés qui se présentent avec les dispositifs déjà proposés, la Société déposante propose un nouveau dispositif suivant lequel l'opercule thermoscellé et l'opercule réutilisable sont conservés avec leurs avantages respectifs à savoir : garantir une inviolabilité et une étanchéité complète du conditionnement avant la première utilisation et offrir une protection du produit avant et pendant toute la durée de l'utilisation de ce produit, une fois l'opercule thermoscellé retiré. Dans le dispositif selon l'invention, les deux opercules sont préalablement assemblés par des moyens permettant, ultérieurement, au plus tard au moment de la première utilisation du produit, une désolidarisation très facile des deux opercules, avec la condition supplémentaire que l'opercule réutilisable présente, à sa périphérie ou au voisinage de sa périphérie, un moyen de centrage dans l'embouchure de sortie du récipient. De la sorte, au moment de la mise en place de l'opercule sur le récipient, l'opercule à thermosceller se trouve automatiquement centré sur l'embouchure de sortie du récipient grâce au moyen de centrage porté par l'opercule réutilisable, et il n'y a pas de risque de décentrage des opercules lors du transfert du récipient au poste suivant de soudage. La vitesse de mise en place des opercules et, en conséquence, la cadence de la machine, en sont largement augmentées.

Il convient de noter, par ailleurs, que, dans le dispositif selon l'invention, l'opercule réutilisable constitue un écran entre la substance conditionnée dans le récipient, d'une part, et l'opercule thermoscellé, d'autre part. La présence de cet écran peut s'avérer particulièrement utile, lorsque la substance conditionnée dans le récipient est susceptible de favoriser une détérioration plus ou moins rapide de la zone de thermoscellage sur le récipient de l'opercule d'inviolabilité, ce qui risquerait à terme de détruire ladite inviolabilité.

La présente invention a donc d'abord pour objet le produit industriel nouveau que constitue un ensemble pour le conditionnement d'une substance, que l'on désire protéger de l'atmosphère extérieure, comprenant :
- un récipient destiné à renfermer ladite substance ;
- un premier opercule de protection et d'inviolabilité scellé sur la bordure supérieure dudit récipient, ladite bordure délimitant l'embouchure de sortie du récipient ;
- un second opercule réutilisable, destiné à protéger ladite substance après chaque prélèvement de celle-ci dans le récipient, ledit second opercule étant disposé au-dessous du premier en étant en appui périphérique sur une portée ménagée sur le récipient et constituée par un décrochement vers l'extérieur de la paroi interne du récipient au voisinage de la bordure supérieure de ce dernier ; caractérisé par le fait que le second opercule comporte à sa périphérie ou au voisinage de sa périphérie, un moyen de centrage dans l'embouchure de sortie du récipient, et que les deux opercules sont reliés ensemble, avant leur mise en place sur le récipient, par des moyens de liaison à caractère provisoire.

Conformément à un mode de réalisation préféré de la présente invention, les deux opercules sont reliés ensemble dans leur partie centrale. Le point de liaison le plus approprié est, en effet, le centre des opercules car, au moment de l'extraction de l'opercule thermoscellé, le point de cisaillement maximum se situe au centre du sous-ensemble constitué par les deux opercules ; si le point de liaison était situé en périphérie, il y aurait un risque de ne pas bien désolidariser les deux opercules, voire d'enlever l'opercule inférieur avec l'opercule supérieur.

Toutefois, comme cela sera indiqué ci-après, dans le cas où la liaison entre les deux opercules est effectuée à l'aide d'une goutte de colle ou d'une cire à bas point de fusion, lors du thermosoudage de l'opercule supérieur sur le goulot du récipient, la chaleur dégagée par l'outil de soudure peut permettre une désolidarisation automatique des deux opercules.

Les deux opercules peuvent être reliés par collage, notamment à l'aide d'une cire, d'un adhésif thermofusible ou d'un adhésif double face. Ils peuvent également être reliés par soudage, notamment par soudage par ultrasons ou par soudage thermique, ou encore ils peuvent être reliés par un assemblage mécanique.

Conformément à d'autres caractéristiques de l'ensemble selon la présente invention, le premier opercule comporte, à sa périphérie, une languette de préhension ; il est constitué d'un matériau feuilleté, thermoscellable formé d'une feuille d'aluminium prise en sandwich entre deux couches, notamment entre une feuille de polyéthylène ou polypropylène sur la face inférieure et une couche de vernis de protection sur la face supérieure.

Quant au second opercule, il peut comporter avantageusement une protubérance centrale par laquelle est assurée la liaison provisoire avec le premier opercule ; le moyen de centrage, qu'il porte, peut avantageusement constituer en lui-même, ou bien comporter, un moyen d'étanchéité du récipient ; ledit moyen de centrage est avantageusement constitué par une jupe périphérique inférieure portée par le second opercule au voisinage de sa bordure libre, ledit second opercule reposant, par sa zone de bordure extérieure à ladite jupe, sur la portée ménagée à l'intérieur du récipient.

La présente invention a également pour objet un procédé de conditionnement d'une substance dans l'ensemble tel que défini ci-dessus, caractérisé par le fait que :
- dans une première étape, on solidarise les deux opercules superposés et centrés, à l'aide de moyens de liaison à caractère provisoire ;
- dans une deuxième étape, on réalise le transfert, sur le récipient contenant la substance, du sous-ensemble constitué par les deux opercules ainsi rendus solidaires, de sorte que le premier opercule de protection et d'inviolabilité repose par sa périphérie sur la bordure supérieure du récipient, avec centrage automatique sur le récipient par le moyen de centrage porté par le deuxième opercule ;
- et dans une troisième étape, on soude le premier opercule sur la bordure supérieure du récipient.

Le récipient étant généralement équipé d'une capsule de fermeture, on effectue avantageusement le soudage du premier opercule par induction après avoir mis en place la capsule de fermeture du récipient. On peut également mettre en place sur le récipient le sous-ensemble constitué par les deux opercules rendus solidaires et disposés à l'intérieur de la capsule de fermeture.

Pour mieux faire comprendre l'objet de la présente invention, on va en décrire ci-après, à titre purement illustratif et non limitatif, un mode de réalisation représenté sur le dessin annexé.

Sur ce dessin :
- la figure 1 est une vue en coupe axiale d'un ensemble selon la présente invention fermé par une capsule de protection ;
- la figure 2 est une vue de dessus de l'ensemble de la figure 1, selon II-II de cette figure, après retrait de la capsule et du premier opercule thermoscellé ; et
- la figure 3 est une vue de dessus de ce premier opercule.

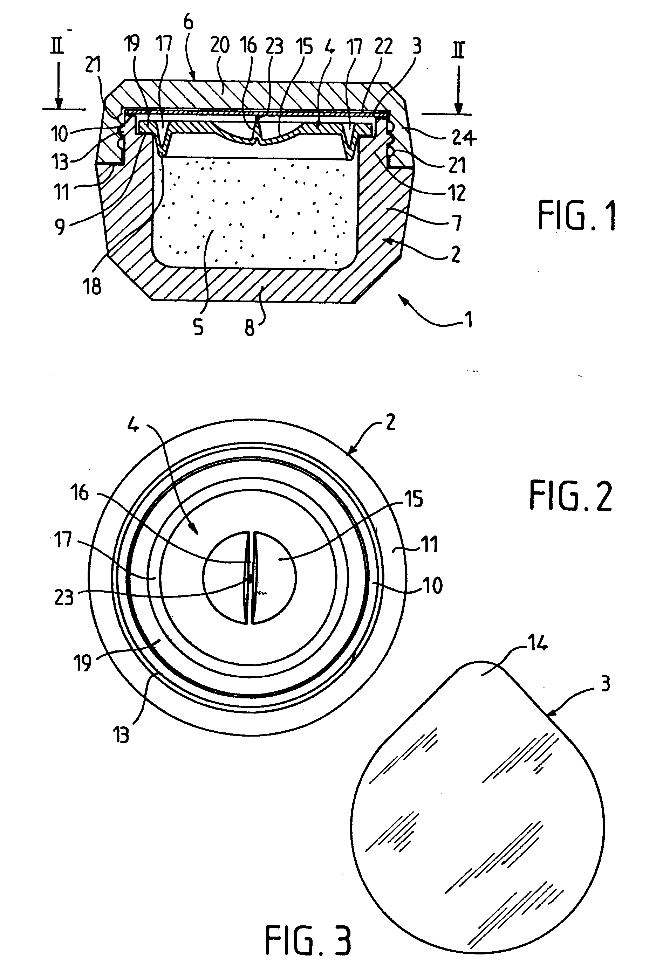

Si l'on se réfère à la figure 1, on voit que l'on a représenté par 1, un ensemble constitué par un récipient 2 en verre ou en matière plastique, qui, en position de stockage, est fermé, de façon étanche, par un premier opercule 3 de protection et d'inviolabilité, un second opercule 4, réutilisable, venant se placer à la partie supérieure du récipient 2 comme décrit ci-après, ledit second opercule 4 pouvant être replacé sur ce dernier après chaque prélèvement de la substance 5 qui y est contenue ; le récipient 2 est en outre protégé, dans son ensemble, par une capsule 6, qui constitue un couvercle.

Le récipient 2 comporte une paroi latérale cylindrique 7 raccordée à un fond 8. La surface intérieure de la paroi latérale 7 présente un décrochement 9 vers l'extérieur à une distance relativement faible de sa bordure supérieure 10, ce décrochement 9 définissant une portée annulaire dont le rôle est indiqué plus loin. La surface extérieure de la paroi 7 comporte un décrochement 11 vers l'intérieur. On constitue ainsi, à la partie supérieure du récipient 2, un goulot 12 qui porte un filetage 13.

L'opercule 3 est constitué d'un matériau feuilleté formé d'une feuille d'aluminium prise en sandwich entre une feuille de polyéthylène sur sa face inférieure et une couche de vernis de protection sur sa face supérieure ; il présente une forme d'ensemble circulaire, dont le diamètre est sensiblement égal, voire légèrement supérieur, au diamètre extérieur du goulot 12. Par ailleurs, l'opercule 3 se prolonge sur une zone de sa périphérie, par une languette de préhension 14.

Le second opercule est un élément circulaire thermoformé en polypropylène. Il comporte une cuvette circulaire centrale 15, dans laquelle est formée une protubérance 16 disposée diamétralement ; une gorge annulaire 17 est ménagée au voisinage de sa périphérie, afin de constituer une jupe périphérique 18 de centrage de l'opercule 4. Celui-ci se trouve en appui sur la portée 9 par sa bordure périphérique plate 19, extérieure à ladite jupe 18.

La capsule 6 comporte une jupe périphérique 24 raccordée à un fond 20. La jupe 24 comporte intérieurement un filetage 21 destiné à coopérer avec le filetage 13 du goulot 12 du récipient 2. Contre le fond 20 de la capsule 6, est appliqué un joint d'étanchéité 22, constitué par une feuille circulaire d'un matériau vendu sous la dénomination commerciale "Triseal".

Le conditionnement de la substance dans le récipient 2 s'effectue à l'échelle industrielle de façon très simple : on commence par réunir, en les centrant, les deux opercules 3 et 4 par exemple par un point de colle 23 au niveau du centre de la protubérance 16 de l'opercule 4. On peut également assurer la liaison 23 par un point de soudure thermique ou par ultrasons ; les sous-ensembles ainsi réalisés à partir des deux opercules 3 et 4 sont disposés dans un chargeur à glissière verticale.

La distribution à partir de ce chargeur est réalisée, de façon traditionnelle, à l'aide d'un bras muni d'une ventouse, qui saisit les sous-ensembles individuellement et vient les déposer sur le rebord de chaque récipient 2. Dans cette opération, chaque opercule 3 est automatiquement centré sur son récipient 2 associé par la jupe périphérique 18 de l'opercule 4. Il en résulte une distribution très rapide, en une seule opération, des opercules 3 et 4 sur les récipients.

On effectue ensuite un transfert des récipients 2 à un poste de soudage, où les opercules 3 sont thermoscellés à l'aide d'une tête de soudage chauffée à une température d'environ 200°C. Dans le cas où l'assemblage des deux opercules 3 et 4 a été réalisé avec un point de colle ou un point de cire à bas point de fusion, la chaleur dégagée par l'outil de soudure permet une désolidarisation de l'opercule 4 vis-à-vis de l'opercule 3.

On pourrait également, avant de transférer les récipients 2 au poste de soudage, fermer les récipients avec leur capsule 6 associée et faire passer les ensembles 1 au travers d'un portique d'induction qui, en élevant la température de l'aluminium des opercules 3, provoque la soudure de ceux-ci, sans qu'il y ait contact direct avec un outil de soudure. On pourrait également prévoir de disposer chaque sous-ensemble 3-4 à l'intérieur d'une capsule 6, chaque récipient 2 étant fermé par la capsule 6 ainsi équipée ; la soudure s'effectue ensuite par passage au travers du portique d'induction sur la chaîne.

Lors de l'utilisation, à la première ouverture du récipient 2, ou lors du dévissage de la capsule 6, on distingue un opercule classique thermoscellé 3. Le retrait de cet opercule 3 laisse apparaître l'opercule 4, qui reste en place sur le récipient 2 :
- soit parce qu'il s'est déjà désolidarisé de l'opercule 3 à cause de la chaleur dégagée par l'outil de soudure ;
- soit parce qu'au moment du retrait de l'opercule 3, l'angle imprimé à celui-ci engendre un cisaillement au niveau du point d'attache des deux opercules 3 et 4.

Le récipient 2 s'utilise ensuite comme un récipient classique muni simplement d'un opercule 4 réutilisable.

Dans le mode de réalisation représenté, il serait possible de supprimer le joint d'étanchéité 22, l'étanchéité étant alors assurée par la jupe 18 de l'opercule 4 pénétrant dans l'embouchure du récipient 2.

## Revendications

1. Ensemble pour le conditionnement d'une substance, que l'on désire protéger de l'atmosphère extérieure, comprenant :
- un récipient (2) destiné à renfermer ladite substance (5) ;
- un premier opercule (3) de protection et d'inviolabilité scellé sur la bordure supérieure (10) dudit récipient (2), ladite bordure délimitant l'embouchure de sortie du récipient (2) ;
- un second opercule (4) réutilisable, destiné à protéger ladite substance (5) après chaque prélèvement de celle-ci dans le récipient (2), ledit second opercule (4) étant disposé au-dessous du premier en étant en appui périphérique sur une portée (9) ménagée sur le récipient (2) et constituée par un décrochement vers l'extérieur de la paroi interne du récipient (2) au voisinage de la bordure supérieure (10) de ce dernier ; caractérisé par le fait que le second opercule (4) comporte à sa périphérie ou au voisinage de sa périphérie, un moyen (18) de centrage dans l'embouchure de sortie du récipient (2), et que les deux opercules (3) et (4) sont reliés ensemble, avant leur mise en place sur le récipient (2), par des moyens de liaison (23) à caractère provisoire.

2. Ensemble selon la revendication 1, caractérisé par le fait que les deux opercules (3) et (4) sont reliés ensemble dans leur partie centrale.

3. Ensemble selon l'une des revendications 1 ou 2, caractérisé par le fait que les deux opercules (3) et (4) sont reliés par collage, notamment à l'aide d'un adhésif thermofusible ou d'un adhésif double face.

4. Ensemble selon l'une des revendications 1 ou 2, caractérisé par le fait que les deux opercules (3) et (4) sont reliés par soudage, notamment par soudage par ultrasons ou par soudage thermique.

5. Ensemble selon l'une des revendications 1 ou 2, caractérisé par le fait que les deux opercules (3) et (4) sont reliés par assemblage mécanique.

6. Ensemble selon l'une des revendications 1 à 5, caractérisé par le fait que le premier opercule (3) comporte, à sa périphérie, une languette de préhension (14).

7. Ensemble selon l'une des revendications 1 à 6, caractérisé par le fait que le premier opercule (3) est constitué d'un matériau feuilleté, thermosoudable ou thermoscellable, formé d'une feuille d'aluminium dont la face inférieure est couverte d'un film en polyéthylène ou polypropylène et la face supérieure est enduite d'un vernis de protection.

8. Ensemble selon la revendication 2, caractérisé par le fait que le second opercule (4) comporte une protubérance centrale (16) par laquelle est assurée la liaison provisoire avec le premier opercule (3).

9. Ensemble selon l'une des revendications 1 à 8, caractérisé par le fait que le moyen de centrage (18) est constitué par une jupe périphérique inférieure portée par le second opercule (4) au voisinage de sa bordure libre, ledit second opercule (4) reposant, par sa zone de bordure (19) extérieure à ladite jupe (18), sur la portée (9) ménagée à l'intérieur du récipient (2).

10. Ensemble selon l'une des revendications 1 à 9, caractérisé par le fait que le moyen de centrage (18) constitue lui-même, ou comporte, un moyen d'étanchéité du récipient (2).

11. Procédé de conditionnement d'une substance dans l'ensemble tel que défini à l'une des revendications 1 à 10, caractérisé par le fait que :
- dans une première étape, on solidarise les deux opercules (3) et (4) superposés et centrés, à l'aide de moyens de liaison (23) à caractère provisoire;
- dans une deuxième étape, on réalise le transfert, sur le récipient (2) contenant la substance (5), du sous-ensemble constitué par les deux opercules (3) et (4) ainsi rendus solidaires, de sorte que l'opercule (3) de protection et d'inviolabilité repose sur la bordure supérieure (10) du récipient (2), avec centrage automatique sur le récipient (2) par le moyen de centrage (18) ; et
- dans une troisième étape, on soude le premier opercule (3) sur la bordure supérieure (10) du récipient (2).

12. Procédé selon la revendication 11, pour l'assemblage d'un récipient (2) équipé d'une capsule de fermeture (6), caractérisé par le fait qu'on effectue le soudage du premier opercule (3), par induction, après avoir mis en place la capsule (6) de fermeture du récipient (2).

13. Procédé selon l'une des revendications 11 ou 12, pour l'assemblage d'un récipient (2) équipé d'une capsule de fermeture (6), caractérisé par le fait qu'on met en place sur le récipient (2) le sous-ensemble constitué par les deux opercules (3) et (4) rendus solidaires et disposés à l'intérieur de la capsule de fermeture (6).

## Patentansprüche

1. Kombination zum Verpacken einer Substanz, die gegenüber der Außenatmosphäre geschützt werden soll, umfassend:
- einen Behälter (2) zur Aufnahme der Substanz (5);
- einen ersten Innendeckel (3) zum Schutz und zur Sicherung der Unverletzlichkeit, das auf den oberen Rand (10) des Behälters (2) dicht aufgebracht ist, wobei der Rand die Entnahmeöffnung des Behälters (2) umgibt;
- einen wiederverwendbaren zweiten Innendeckel (4) zum Schutz der Substanz (5) im Behälter (2) nach jeder Entnahme derselben, wobei der zweite Innendeckel (4) unter dem ersten angeordnet ist und dabei auf einer auf dem Behälter (2) ausgebildeten Auflagefläche (9) über ihren Umfang aufliegt, welche von einem Absatz der Innenwandung des Behälters (2) nach außen hinin der Nähe seines oberen Randes (10) gebildet wird,
dadurch gekennzeichnet, daß der zweite Innendeckel (4) auf seinem Umfang oder in der Nähe seines Umfangs eine Einrichtung (18) zum Zentrieren in der Entnahmeöffnung des Behälters (2) aufweist, und daß die beiden Innendeckel (3) und (4) vor dem Aufsetzen auf dem Behälter (2) durch Verbindungsmittel (23) provisorischer Art miteinander verbunden sind.

2. Kombination nach Anspruch 1, dadurch gekennzeichnet, daß die beiden Innendeckel (3) und (4) in ihrem jeweiligen Mittelbereich miteinander verbunden sind.

3. Kombination nach Anspruch 1 oder 2, dadurch gekennzeichnet, daß die beiden lnnendeckel (3) und (4) miteinander verklebt sind, insbesondere mittels eines warmschmelzbaren Klebers oder eines zweiseitig wirkenden Klebers.

4. Kombination nach Anspruch 1 oder 2, dadurch gekennzeichnet, daß die beiden Innendeckel (3) und (4) miteinander verschweißt sind, insbesondere durch Ultraschallschweißen oder thermisches Schweißen.

5. Kombination nach Anspruch 1 oder 2, dadurch gekennzeichnet, daß die beiden Innendeckel (3) und (4) mechanisch miteinander verbunden sind.

6. Kombination nach einem der Ansprüche 1 bis 5, dadurch gekennzeichnet, daß der erste Innendeckel (3) auf seinem Umfang eine Grifflasche (14) aufweist.

7. Kombination nach einem der Ansprüche 1 bis 6, dadurch gekennzeichnet, daß der erste lnnendeckel (3) aus einem thermisch verschweißbaren oder thermisch dichtenden Schichtmaterial besteht, das aus einer Aluminiumschicht gebildet ist. deren Unterseite mit einem Polyethylen- oder Polypropylenfilm beschichtet ist, und deren Oberseite mit einem Schutzlack überzogen ist.

8. Kombination nach Anspruch 2, dadurch gekennzeichnet, daß der zweite Innendeckel (4) in der Mitte eine Erhebung (16) aufweist, durch welche die zeitweilige Verbindung mit dem ersten Innendeckel (3) gewährleistet ist.

9. Kombination nach einem der Ansprüche 1 bis 8, dadurch gekennzeichnet, daß die Zentriereinrichtung (18) aus einer peripheren unteren Mantelwandung auf dem zweiten Innendeckel (4) in der Nähe von dessen freiem Rand besteht, wobei der zweite Innendeckel (4) über seinen außerhalb der Mantelwandung (18) liegenden Randbereich (19) auf der im Inneren des Behälters (2) ausgebildeten Auflagefläche (9) aufliegt.

10. Kombination nach einem der Ansprüche 1 bis 9, dadurch gekennzeichnet, daß die Zentriereinrichtung (18) ihrerseits eine Einrichtung zum Abdichten des Behälters (2) darstellt oder eine solche aufweist.

11. Verfahren zum Verpacken einer Substanz in einer Kombination gemäß einem der Ansprüche 1 bis 10, dadurch gekennzeichnet, daß
- in einem ersten Schritt die beiden übereinander gelegten und zentrierten Innendeckel (3) und (4) mit Hilfe der Verbindungsmittel (23) provisorischer Art fest miteinander verbunden werden;
- in einem zweiten Schritt die aus den beiden auf diese Weise fest miteinander verbundenen Innendeckeln (3) und (4) bestehende Teilbaugruppe auf den die Substanz (5) enthaltenden Behälter (2) so verbracht wird, daß der Innendeckel (3) zum Schutz und zur Sicherung der Unverletzlichkeit unter automatischer Zentrierung auf dem Behälter (2) durch die Zentriereinrichtung (18) auf dem oberen Rand (10) des Behälters (2) aufliegt; und
- in einem dritten Schritt der erste lnnendeckel (3) auf den oberen Rand (10) des Behälters (2) aufgeschweißt wird.

12. Verfahren nach Anspruch 11 zum Zusammenfügen eines Behälters (2) mit einer Verschlußkapsel (6). dadurch gekennzeichnet, daß der erste Innendeckel (3) nach dem Aufsetzen der Verschlußkapsel (6) des Behälters (2) induktiv eingeschweißt wird.

13. Verfahren nach Anspruch 11 oder 12 zum Zusammenfügen eines mit einer Verschlußkapsel (6) ausgerüsteten Behälters (2), dadurch gekennzeichnet, daß die aus den beiden fest miteinander verbundenen und im Inneren der Verschlußkapsel (6) angeordneten Innendeckeln (3) und (4) bestehende Teilbaugruppe auf den Behälter (2) aufgesetzt wird.

## Claims

1. Unit for packaging a substance which it is desired to protect from the external atmosphere, comprising:
- a container (2) intended to enclose the said substance (5);
- a first tamper-proof protective cover (3) sealed to the upper edge (10) of the said container (2), the said edge defining the outlet orifice of the container (2);
- a second reusable cover (4) intended to protect the said substance (5) each time some of it has been removed from the container (2), the said second cover (4) being disposed below the first, resting via its periphery against a bearing surface (9) formed on the container (2),and consisting of a recess towards the exterior of the inner wall of the container (2) in the vicinity of the upper edge (10) of the latter; characterised in that the second cover (4) comprises on its periphery or in the vicinity of its periphery a means (18) for centering in the outlet orifice of the container (2); and in that the two covers (3) and (4) are connected together before they are placed on the container (2) by connecting means (23) of temporary nature.

2. Unit according to Claim 1, characterised in that the two covers (3) and (4) are connected together in their central part.

3. Unit according to one of Claims 1 and 2, characterised in that the two covers (3) and (4) are connected by means of gluing, especially with the aid of a hot-melt adhesive or a double-sided adhesive.

4. Unit according to one of Claims 1 and 2, characterised in the the two covers (3) and (4) are connected by means of welding, especially by ultrasonic welding or by thermal welding.

5. Unit according to one of Claims 1 and 2, characterised in that the two covers (3) and (4) are connected by means of mechanical assembly.

6. Unit according to one of Claims 1 to 5, characterised in that the first cover (3) comprises a grip-tab (14) on its periphery.

7. Unit according to one of Claims 1 to 6, characterised in that the first cover (3) consists of a heat-weldable or heat-sealable laminated material formed from a sheet of aluminium, the lower face of which is covered by a film of polyethylene or polypropylene and the upper face of which is coated with a protective varnish.

8. Unit according to Claim 2, characterised in that the second cover (4) comprises a central protuberance (16) ensuring the temporary connection with the first cover (3).

9. Unit according to one of Claims 1 to 8, characterised in that the centering means (18) consists of a lower peripheral skirt carried by the second cover (4) in the vicinity of its free edge, the said second cover (4) resting, via its edge zone (19) exterior to the said skirt (18), on the bearing surface (9) formed in the interior of the container (2).

10. Unit according to one of Claims 1 to 9, characterised in that the centering means (18) itself constitutes or comprises a sealing means for the container (2).

11. Process for packaging a substance in a unit as is described in one of Claims 1 to 10, characterised in that:
- in a first stage, the two superimposed and centered covers (3) and (4) are joined together with the aid of connecting means (23) of temporary nature;
- in a second stage, the sub-unit consisting of the two covers (3) and (4) thus joined is transferred onto the container (2) containing the substance (5), in such a manner that the tamper-proof protective cover (3) rests on the upper edge (10) of the container (2), with automatic centering on the container (2) by the centering means (18), and
- in a third stage, the first cover (3) is welded onto the upper edge (10) of the container (2).

12. Process according to Claim 11, for the assembly of a container (2) provided with a closure cap (6), characterised in that the first cover (3) is induction-welded after the closure cap (6) of the container (2) has been fitted.

13. Process according to one of Claims 11 and 12, for the assembly of a container (2) provided with a closure cap (6), characterised in that the sub-unit consisting of the two covers (3) and (4), joined and disposed inside the closure cap (6), is fitted onto the container (2).
